# EUROPEAN PATENT APPLICATION

(11) **EP 4 687 338 A1**
(43) Date of publication of application: **04.02.2026**
(21) Application number: 25192175.5
(22) Date of filing: 28.07.2025
(51) Int. Cl.: H04N 5/262, H04N 1/00, H04N 1/21, H04N 23/63, H04N 23/60, H04N 23/80, H04N 1/387, G06T 7/11

(54) **IMAGE PROCESSING DEVICE, TERMINAL DEVICE, EDITING METHOD, IMAGE PROCESSING METHOD, AND PROGRAM**

(30) Priority: 29.07.2024 JP 2024122607
(71) Applicant: FUJIFILM Corporation, Tokyo 106-8620 (JP)
(72) Inventor: YOSHIDA, Masako, Saitama (JP); MIZUKAMI, Hiroyuki, Saitama (JP); YOSHIDA, Momoko, Saitama (JP); SHIMURA, Ayaha, Saitama (JP); OSHIMA, Hiroyuki, Saitama (JP)
(74) Representative: Meissner Bolte Partnerschaft mbB

(57) **Abstract**

Provided are an image processing device, a terminal device, an editing method, an image processing method, and a program capable of obtaining a plurality of images in which a subject in a recommended region is shown at an appropriate position in a selected layout.

An image processing device (40, 100) includes a processor (48). The processor (48) is configured to display a live view image (36) on a screen (34). The processor (48) is configured to display, in the live view image (36), a recommended region (68) indicating a recommended position in the live view image (36). The processor (48) is configured to acquire a plurality of captured images (78) each having an outer edge larger than an outer edge of the recommended region (68) in a state where the recommended region (68) is displayed in the live view image (36). The processor (48) is configured to output a plurality of adjusted images (78A) based on the plurality of captured images (78) in a selected layout.

## Description

### BACKGROUND OF THE INVENTION

### 1. Field of the Invention

The present disclosure relates to an image processing device, a terminal device, an editing method, an image processing method, and a program.

### 2. Description of the Related Art

JP2013-090240A discloses an imaging apparatus comprising a display control unit that displays a live view image and a selected trimming frame superimposed on the live view image on a display, a reception unit that receives a position change instruction for changing a position of the trimming frame, and a recording control unit that associates information on the selected trimming frame and information on the changed position with captured image data.

### SUMMARY OF THE INVENTION

One embodiment according to the present disclosure provides an image processing device, a terminal device, an editing method, an image processing method, and a program capable of obtaining a plurality of images in which a subject in a recommended region is shown at an appropriate position in a selected layout.

A first aspect according to the present disclosure is an image processing device comprising: a processor, in which the processor is configured to display a live view image on a screen, display, in the live view image, a recommended region indicating a recommended position in the live view image, acquire a plurality of captured images each having an outer edge larger than an outer edge of the recommended region in a state where the recommended region is displayed in the live view image, and output a plurality of adjusted images based on the plurality of captured images in a selected layout.

A second aspect according to the present disclosure is the image processing device according to the first aspect, in which the adjusted image is an image obtained by adjusting a size of a corresponding captured image to a size such that an image region at a position corresponding to a position of the recommended region in the captured image fits within a layout frame in the layout.

A third aspect according to the present disclosure is the image processing device according to the second aspect, in which the adjustment of the size of the captured image is realized by adjusting a width of the captured image according to a width of the layout frame and/or adjusting a height of the captured image according to a height of the layout frame.

A fourth aspect according to the present disclosure is the image processing device according to the second or third aspect, in which the adjustment of the size of the captured image is realized by trimming the captured image and/or reducing the size of the captured image.

A fifth aspect according to the present disclosure is the image processing device according to any one of the second to fourth aspects, in which the adjusted image is an image obtained by adjusting a shape of the captured image to match a shape of the layout frame.

A sixth aspect according to the present disclosure is the image processing device according to any one of the second to fifth aspects, in which a positional relationship between the recommended region and the layout frame is such that a portion of a subject that is shown in at least a central portion of the recommended region is disposed in a central portion of the layout frame.

A seventh aspect according to the present disclosure is the image processing device according to any one of the second to fifth aspects, in which the adjusted image is an image obtained by adjusting the size of the captured image to a size such that the image region fits within the layout frame in accordance with position information indicating the position of the recommended region in the captured image.

An eighth aspect according to the present disclosure is the image processing device according to the seventh aspect, in which the captured image and the position information are recorded on a recording medium in a state of being associated with each other, the captured image is extracted from the recording medium in response to a given extraction instruction, and the position information associated with the captured image extracted from the recording medium is extracted from the recording medium, and the adjusted image is an image obtained by adjusting the size of the captured image extracted from the recording medium to a size such that the image region fits within the layout frame in accordance with the position information extracted from the recording medium.

A ninth aspect according to the present disclosure is the image processing device according to any one of the second to eighth aspects, in which the layout frame is a laterally long frame or a vertically long frame in front view with respect to the screen.

A tenth aspect according to the present disclosure is the image processing device according to any one of the first to ninth aspects, in which the recommended region is a square region.

An eleventh aspect according to the present disclosure is the image processing device according to any one of the first to tenth aspects, in which the captured image is obtained by performing interval imaging or continuous imaging.

A twelfth aspect according to the present disclosure is the image processing device according to the eleventh aspect, in which the plurality of captured images are selected from a plurality of candidate images obtained by performing the interval imaging or the continuous imaging in response to a given selection instruction.

A thirteenth aspect according to the present disclosure is the image processing device according to the twelfth aspect, in which the plurality of candidate images are displayed on the screen as a plurality of thumbnail images, and each of the plurality of captured images is a candidate image corresponding to a thumbnail image selected from the plurality of thumbnail images.

A fourteenth aspect according to the present disclosure is a terminal device comprising: the image processing device according to any one of the first to thirteenth aspects; and an image sensor, in which the live view image is obtained by performing imaging using the image sensor.

A fifteenth aspect according to the present disclosure is an image processing method comprising: displaying a live view image on a screen; displaying, in the live view image, a recommended region indicating a recommended position in the live view image; acquiring a plurality of captured images each having an outer edge larger than an outer edge of the recommended region in a state where the recommended region is displayed in the live view image; and outputting a plurality of adjusted images based on the plurality of captured images in a selected layout, in which the adjusted image is an image obtained by adjusting a size of a corresponding captured image to a size such that an image region at a position corresponding to a position of the recommended region in the captured image fits within a layout frame in the layout.

A sixteenth aspect according to the present disclosure is a program for causing a computer to execute a process comprising: displaying a live view image on a screen; displaying, in the live view image, a recommended region indicating a recommended position in the live view image; acquiring a plurality of captured images each having an outer edge larger than an outer edge of the recommended region in a state where the recommended region is displayed in the live view image; and outputting a plurality of adjusted images based on the plurality of captured images in a selected layout, in which the adjusted image is an image obtained by adjusting a size of a corresponding captured image to a size such that an image region at a position corresponding to a position of the recommended region in the captured image fits within a layout frame in the layout.

### BRIEF DESCRIPTION OF THE DRAWINGS

Fig. 1 is a conceptual diagram showing an example of an overall configuration of an image management system.
Fig. 2 is a conceptual diagram showing an example of an aspect in which a user uses a smart device.
Fig. 3 is a block diagram showing an example of a configuration of an electrical hardware of a smart device.
Fig. 4 is a block diagram showing an example of main functions of the smart device.
Fig. 5 is a conceptual diagram showing an example of processing contents of a processor in a case in which live view imaging is performed.
Fig. 6 is a conceptual diagram showing an example of processing contents of the processor in a case in which an interval imaging instruction is given to the smart device by the user.
Fig. 7 is a conceptual diagram showing an example of processing contents of the processor and an example of display contents on a screen in a case in which an interval imaging instruction is given to the smart device by the user.
Fig. 8 is a conceptual diagram showing an example of an aspect in which a plurality of data sets generated by performing interval imaging are recorded on a memory card.
Fig. 9 is a conceptual diagram showing an example of an aspect in which a plurality of thumbnail images corresponding to a plurality of main exposure images included in the plurality of data sets recorded on the memory card are generated and displayed on the screen.
Fig. 10 is a conceptual diagram showing an example of an aspect in which a thumbnail image is selected from the plurality of thumbnail images in response to a selection instruction from the user.
Fig. 11 is a conceptual diagram showing an example of an aspect in which a main exposure image corresponding to the thumbnail image selected by the user is acquired as a selected image by the processor, and a recommended region is reproduced and allocated to the selected image at a position indicated by position information.
Fig. 12 is a conceptual diagram showing an example of an aspect in which each of two selected images is allocated to a corresponding layout frame in a layout frame image.
Fig. 13 is a conceptual diagram showing an example of an aspect in which each of two adjusted images obtained by adjusting a size of each of two selected images to a size matching a size of a layout frame is allocated to the layout frame.
Fig. 14 is a conceptual diagram showing an example of an aspect in which a layout image obtained by allocating each of two adjusted images to a corresponding layout frame is output to a predetermined output destination.
Fig. 15 is a conceptual diagram showing an example of an aspect in which each of four selected images is allocated to a corresponding layout frame in a layout frame image.
Fig. 16A is a conceptual diagram showing an example of an aspect in which a size of each of two selected images among four selected images is adjusted to a size matching a size of a layout frame.
Fig. 16B is a conceptual diagram showing an example of an aspect in which a size of each of two selected images different from the two selected images shown in Fig. 16A among four selected images is adjusted to a size matching a size of a layout frame.
Fig. 17 is a conceptual diagram showing an example of an aspect in which a layout image is generated by allocating each of four adjusted images to a corresponding layout frame.
Fig. 18 is a conceptual diagram showing an example of an aspect in which each of six selected images is allocated to a corresponding layout frame in a layout frame image.
Fig. 19A is a conceptual diagram showing an example of an aspect in which a size of each of three selected images among six selected images is adjusted to a size matching a size of a layout frame.
Fig. 19B is a conceptual diagram showing an example of an aspect in which a size of each of three selected images different from the three selected images shown in Fig. 19A among six selected images is adjusted to a size matching a size of a layout frame.
Fig. 20 is a conceptual diagram showing an example of an aspect in which a layout image is generated by allocating each of six adjusted images to a corresponding layout frame.
Fig. 21 is a flowchart showing an example of a flow of image management processing.
Fig. 22 is a conceptual diagram showing a form example in which the image management processing is performed by an external device in response to a request from the smart device and a processing result is received by the smart device.

### DESCRIPTION OF THE PREFERRED EMBODIMENTS

Hereinafter, an example of an embodiment of an image processing device, a terminal device, an image processing method, and a program according to the present disclosure will be described with reference to the accompanying drawings. The present disclosure can also be applied to a program and a computer program product.

First, terms used in the following description will be described.

CPU is an abbreviation for "central processing unit". GPU is an abbreviation for "graphics processing unit". GPGPU is an abbreviation for "general-purpose computing on graphics processing units". APU is an abbreviation for "accelerated processing unit". TPU is an abbreviation for "tensor processing unit". RAM is an abbreviation for "random access memory". EEPROM is an abbreviation for "electrically erasable programmable read-only memory". ASIC is an abbreviation for "application specific integrated circuit". PLD is an abbreviation for "programmable logic device". FPGA is an abbreviation for "field-programmable gate array". SoC is an abbreviation for "system-on-a-chip". SSD is an abbreviation for "solid state drive". CMOS is an abbreviation for "complementary metal oxide semiconductor". CCD is an abbreviation for "charge coupled device". USB is an abbreviation for "universal serial bus". UI is an abbreviation for "user interface". I/F is an abbreviation for "interface". LAN is an abbreviation for "local area network". WAN is an abbreviation for "wide area network". 5G is an abbreviation for "5th generation mobile communication system".

In the following description, a processor with a reference numeral (hereinafter, simply referred to as a "processor") may be one computing device or a combination of a plurality of computing devices. In addition, the processor may be one type of computing device or a combination of a plurality of types of computing devices. Examples of the computing device include a CPU, a GPU, a GPGPU, an APU, and a TPU.

In the following description, a memory with a reference numeral is a memory such as a RAM that temporarily stores information, and is used as a work memory by the processor.

In the following description, a storage with a reference numeral is one or a plurality of non-volatile storage devices that store various programs, various parameters, and the like. Examples of the non-volatile storage device include a flash memory, a magnetic disk, and a magnetic tape. Examples of the storage also include a cloud storage.

In the following embodiment, an external I/F with a reference numeral controls transmission and reception of various types of information between a plurality of devices connected to each other. An example of the external I/F is a USB interface. A communication I/F including a communication processor, an antenna, and the like may be applied to the external I/F. The communication I/F controls communication between a plurality of computers. Examples of a communication standard applied to the communication I/F include a wireless communication standard including 5G, Wi-Fi (registered trademark), and Bluetooth (registered trademark).

In the following embodiment, "A and/or B" is synonymous with "at least one of A or B". That is, "A and/or B" may refer to A alone, B alone, or a combination of A and B. In addition, in the present specification, in a case in which three or more matters are expressed with the connection of "and/or", the same concept as "A and/or B" is applied.

In the following embodiment, the term "same" refers to not only being completely the same but also being the same in a sense including an error generally allowed in the technical field to which the technology of the present disclosure belongs. In addition, in the following embodiment, the term "match" refers to not only completely matching but also matching in a sense including an error generally allowed in the technical field to which the technology of the present disclosure belongs.

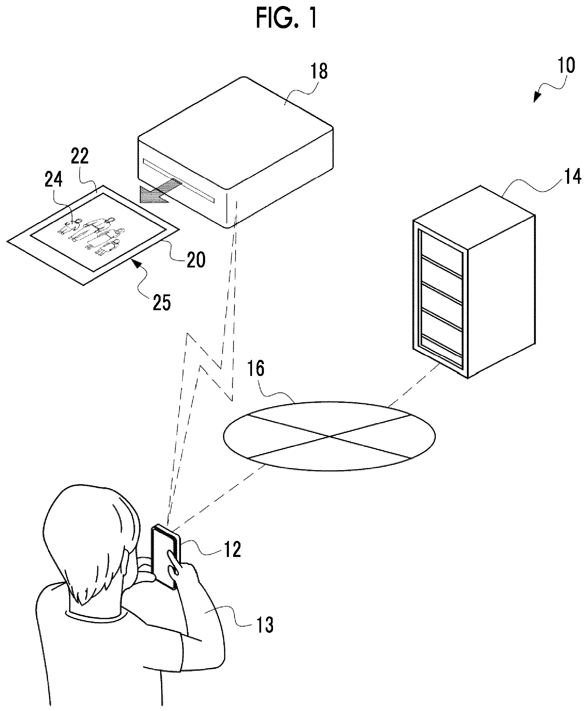

As shown in Fig. 1 as an example, an image management system 10 comprises a smart device 12 and a server 14. The smart device 12 is an example of a "terminal device" according to the present disclosure.

In the example shown in Fig. 1, a smartphone is shown as the smart device 12. The smartphone is merely an example, and a smartwatch, smart glasses, a tablet terminal, a personal computer, or the like may be used. The smart device 12 is used by a user 13.

The smart device 12 and the server 14 are communicably connected via a network 16. Examples of the network 16 include a wide area network (WAN) and a local area network (LAN).

The server 14 provides the smart device 12 with a service in response to a request from the smart device 12. That is, the server 14 executes processing in response to a request from the smart device 12. In addition, the server 14 provides a result of the executed processing to the smart device 12 that has made the request.

The smart device 12 is communicably connected to a printing device 18. An example of the printing device 18 is an instant printer that prints an image on an instant film 20. An instant printer is exemplified here, but this is merely an example. Any device having a communication function and a printing function, such as a multifunction device capable of communicating with a terminal device such as the smart device 12, may be employed. In addition, the present disclosure is established even in a case of a device in which an imaging function and a printing function are integrated instead of the smart device 12. An example of the device in which the imaging function and the printing function are integrated is a hybrid instant camera (for example, a camera equipped with a plurality of functions in which an image obtained by imaging is displayed on a screen, an image obtained by imaging is recorded on a recording medium such as a memory card, editing and/or processing is performed on an image displayed on a screen in response to an instruction from a user, and an image designated by a user is printed). In addition, the instant film 20 is also merely an example. Another type of film, printing paper, or the like may be employed, or any medium on which the image can be printed (in other words, medium on which the image can be recorded) may be employed. In the present embodiment, development is also included in the concept of printing.

In the example shown in Fig. 1, the printing device 18 prints an image 24 (for example, an image transmitted from the smart device 12) on a surface 22 of the instant film 20 in response to an instruction given by the smart device 12 to generate a printed matter 25 (business card-sized instant photograph in the example shown in Fig. 1). The printing device 18 discharges the generated printed matter 25 to the outside of the printing device 18.

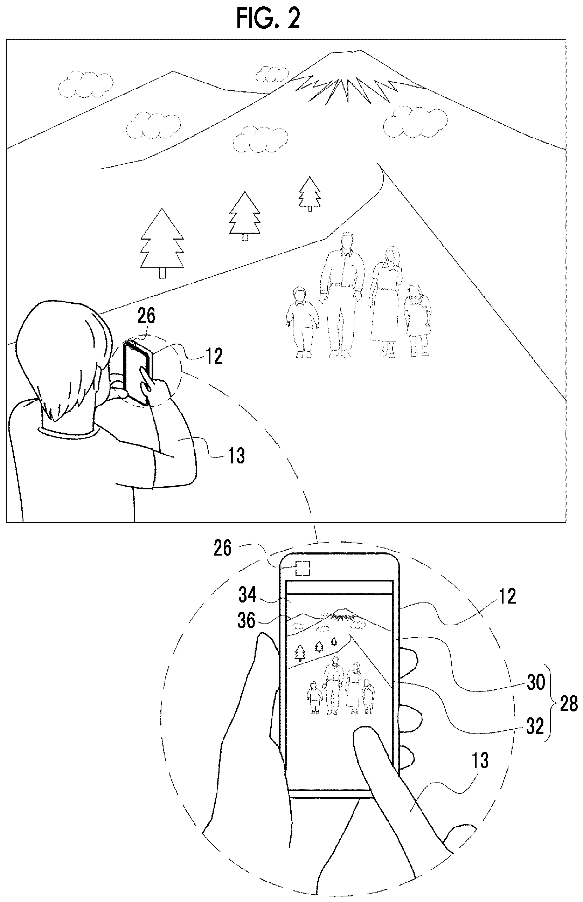

As shown in Fig. 2 as an example, the smart device 12 comprises an imaging apparatus 26, and the imaging apparatus 26 images a subject in response to an instruction given by the user 13.

The smart device 12 comprises a touch panel display 28. The touch panel display 28 has a display 30 (for example, a liquid crystal display or an electroluminescent display) and a touch panel 32, and is formed by, for example, superimposing the touch panel 32 on a screen 34 of the display 30. In the example shown in Fig. 2, an aspect example in which a live view image 36 obtained by imaging the subject is displayed on the screen 34 is shown. The screen 34 is an example of a "screen" according to the present disclosure. The live view image 36 is an example of a "live view image" according to the present disclosure.

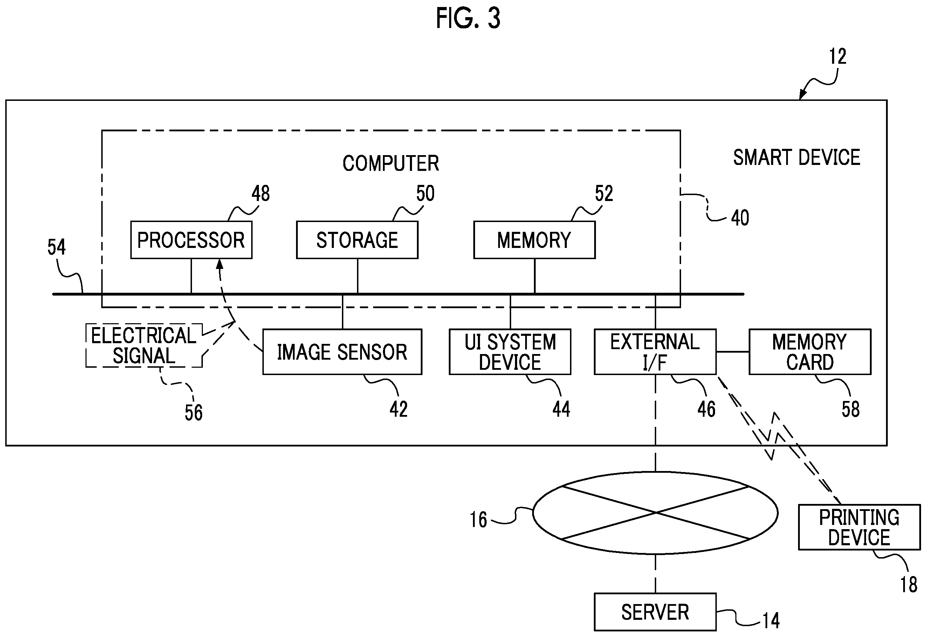

As shown in Fig. 3 as an example, the smart device 12 comprises a computer 40, an image sensor 42, a user interface (UI) system device 44, and an external I/F 46. The computer 40 is an example of an "image processing device" and a "computer" according to the present disclosure. The image sensor 42 is an example of an "image sensor" according to the present disclosure.

The computer 40 comprises a processor 48, a storage 50, and a memory 52. The processor 48, the storage 50, and the memory 52 are connected to a bus 54. The processor 48 is an example of a "processor" according to the present disclosure.

The image sensor 42 is connected to the bus 54. An example of the image sensor 42 is a CMOS image sensor. The image sensor 42 generates an electrical signal 56 indicating the subj ect by imaging the subj ect under the control of the processor 48. The processor 48 acquires the electrical signal 56 from the image sensor 42 and executes various types of signal processing on the electrical signal 56.

Here, a CMOS image sensor is given as an example of the image sensor 42, but this is merely an example, and the image sensor 42 may be other types of image sensors such as a CCD image sensor.

The UI system device 44 is connected to the bus 54. The UI system device 44 includes the touch panel display 28 (see Fig. 2), one or more hard keys (not shown), a microphone (not shown), a speaker (not shown), and the like. The UI system device 44 receives an instruction from the user and outputs a signal indicating the received instruction to the processor 48. In addition, the UI system device 44 presents various types of information to the user under the control of the processor 48. The presentation of the various types of information is realized, for example, by displaying the various types of information on the display 30 (see Fig. 2) or by outputting the various types of information as voice from the speaker.

The external I/F 46 is connected to the bus 54. The external I/F 46 controls the exchange of various types of information between the computer 40 and an external device. In the example shown in Fig. 3, as the external device, the server 14, the printing device 18, and a memory card 58 are shown. The server 14 is communicably connected to the external I/F 46 via the network 16. The printing device 18 is communicably connected to the external I/F 46 via Bluetooth (registered trademark) or the like. The memory card 58 is connected to the external I/F 46 by being loaded into the smart device 12. The memory card 58 is an example of a "recording medium" according to the present disclosure.

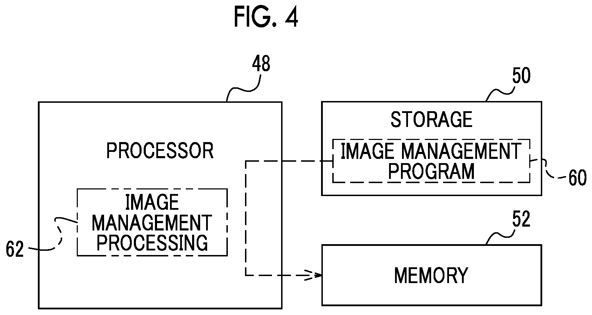

As shown in Fig. 4 as an example, an image management program 60 is stored in the storage 50. The image management program 60 is an example of a "program" according to the present disclosure.

The processor 48 performs image management processing 62. The image management processing 62 is realized by the processor 48 reading out the image management program 60 from the storage 50 and executing the read-out image management program 60 on the memory 52. The image management processing 62 is an example of "processing" according to the present disclosure.

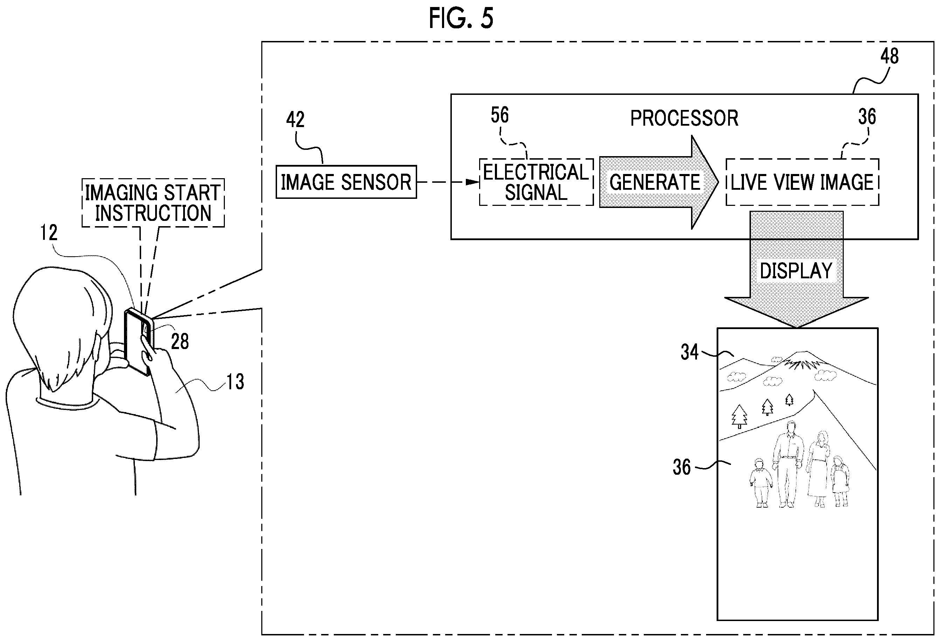

As shown in Fig. 5 as an example, in a case in which an imaging start instruction (for example, an instruction to set an operation mode of the smart device 12 to an imaging mode) is given by the user 13, the smart device 12 executes live view imaging using the image sensor 42. The live view imaging is imaging at a predetermined frame rate. The predetermined frame rate may be, for example, several tens of frames per second (for example, 30 frames per second or 60 frames per second), but this is merely an example, and a frame rate lower than several tens of frames per second or a frame rate higher than several tens of frames per second may be used.

In a case in which an imaging start instruction is given to the smart device 12, the processor 48 acquires the electrical signal 56 generated by the image sensor 42 from the image sensor 42. The processor 48 generates the live view image 36 (for example, a chromatic image or an achromatic image) showing the subject by executing various types of signal processing on the electrical signal 56 acquired from the image sensor 42. The processor 48 displays the live view image 36 on the screen 34.

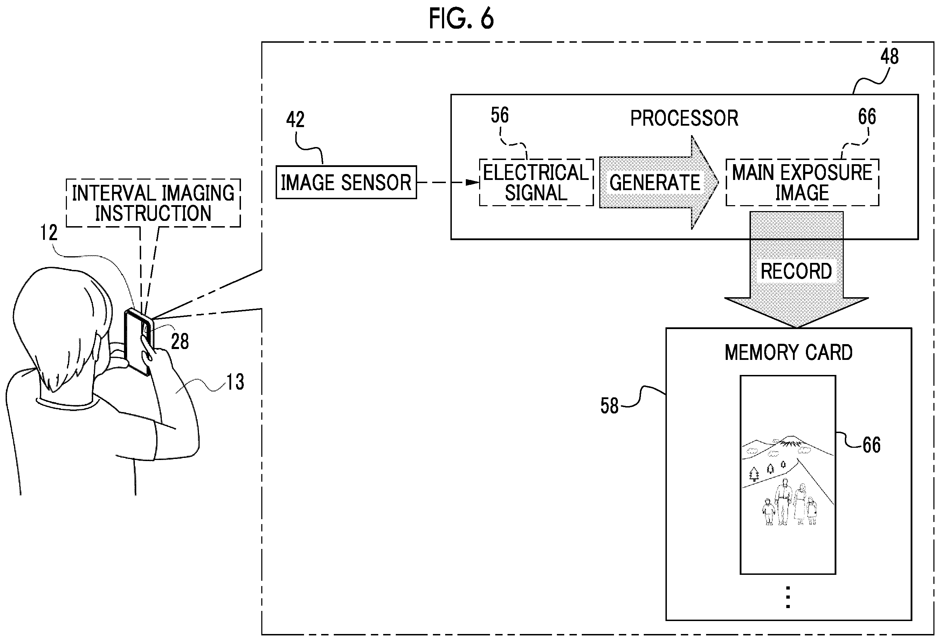

As shown in Fig. 6 as an example, in a case in which an interval imaging instruction is given by the user 13, the smart device 12 executes interval imaging using the image sensor 42. In general, the interval imaging is also referred to as interval time lapse. The interval imaging is processing in which the image sensor 42 performs main exposure continuously at a regular time interval and images obtained by the main exposure are continuously output. In the present embodiment, the main exposure refers to exposure that provides an exposure amount (that is, an exposure that obtains an exposure amount that improves the reproducibility of details and color tones of the subject) that improves image quality, as compared with exposure for obtaining the live view image 36. Here, the interval imaging is exemplified here, but the interval imaging is merely an example, and the present disclosure is established even in a case in which continuous imaging, which is an imaging method of obtaining a plurality of images at a time interval shorter than the interval imaging, is applied instead of the interval imaging.

In a case in which the interval imaging instruction is given to the smart device 12, the processor 48 acquires the electrical signal 56 generated by performing the main exposure using the image sensor 42 at a regular time interval, from the image sensor 42. The processor 48 generates a main exposure image 66 (for example, a chromatic image or an achromatic image) showing the subject by executing various types of signal processing on the electrical signal 56 acquired from the image sensor 42. The main exposure images 66 are generated at regular time intervals and are sequentially recorded on the memory card 58 by the processor 48. The main exposure image 66 is an example of a "candidate image" according to the present disclosure.

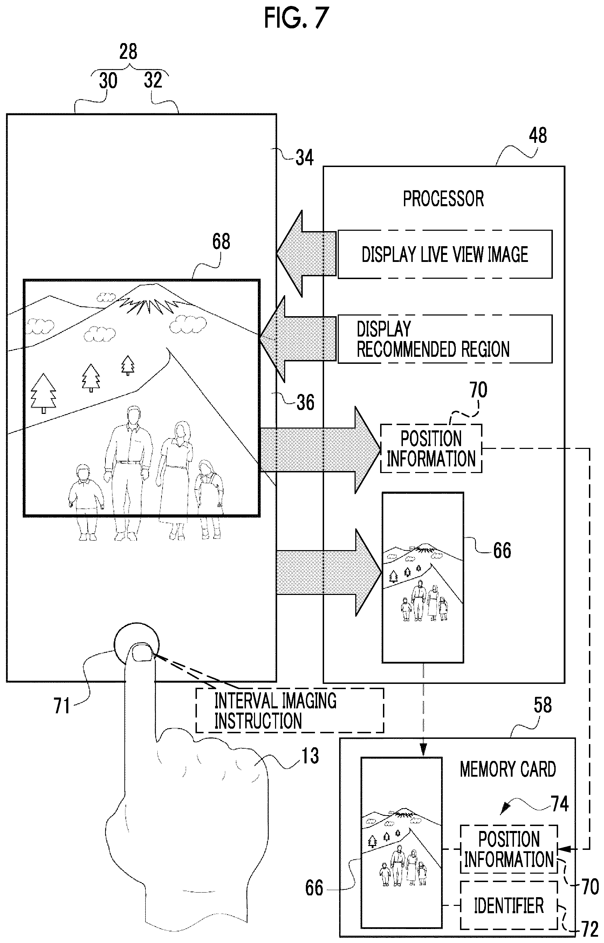

As shown in Fig. 7 as an example, the processor 48 displays a recommended region 68 indicating a recommended position in the live view image 36. The recommended region 68 is displayed in the live view image 36. In the example shown in Fig. 7, the recommended region 68 is superimposed and displayed on the live view image 36. The recommended position in the live view image 36 refers to a position in the live view image 36 at which the subject shown in the live view image 36 is recommended to be located. In the present embodiment, a central region of the screen 34 is the recommended region 68. The shape of the recommended region 68 is a square. That is, the recommended region 68 is a region surrounded by a square frame in a central portion of the screen 34. The position and the size of the recommended region 68 in the live view image 36 (in other words, the position and the size of the recommended region 68 in the screen 34) are fixed.

The processor 48 acquires position information 70 each time the live view image 36 is updated according to a frame rate (that is, for each frame of the live view image 36). The position information 70 refers to information indicating the position of the recommended region 68 in the live view image 36 (for example, two-dimensional coordinates of four corners of the recommended region 68 or two-dimensional coordinates of two corners on diagonal lines of the recommended region 68).

In a case in which the live view image 36 is displayed on the screen 34, a soft key 71 is displayed at the bottom of the screen 34. The interval imaging instruction is realized by turning on the soft key 71.

In a case in which the interval imaging instruction is given to the smart device 12 in a state where the recommended region 68 is displayed in the live view image 36, the processor 48 acquires the main exposure image 66 obtained by the interval imaging. An outer edge (in other words, an outer frame or an image frame) of the main exposure image 66 acquired by the processor 48 is larger than an outer edge (in other words, an outer frame) of the recommended region 68. That is, the visual size of the main exposure image 66 displayed on the screen 34 is larger than the visual size of the recommended region 68 displayed on the screen 34. Therefore, a region in which the main exposure image 66 is displayed includes a region in which the recommended region 68 is displayed.

The processor 48 generates a data set 74 including the acquired main exposure image 66 and records the data set 74 on the memory card 58. The data set 74 includes the main exposure image 66, the position information 70, and an identifier 72, and the position information 70 and the identifier 72 are associated with the main exposure image 66.

The visual size (for example, the size displayed on the screen 34) of the main exposure image 66 included in the data set 74 is the same as the visual size of the live view image 36.

The position information 70 included in the data set 74 is position information 70 related to the recommended region 68 displayed on the screen 34 at a timing at which the main exposure image 66 included in the data set 74 is obtained. The identifier 72 included in the data set 74 is information (for example, a unique number assigned for each frame) for identifying the main exposure image 66 included in the data set 74. By associating the identifier 72 with the main exposure image 66, it is possible to manage each main exposure image 66 in a distinguishable manner.

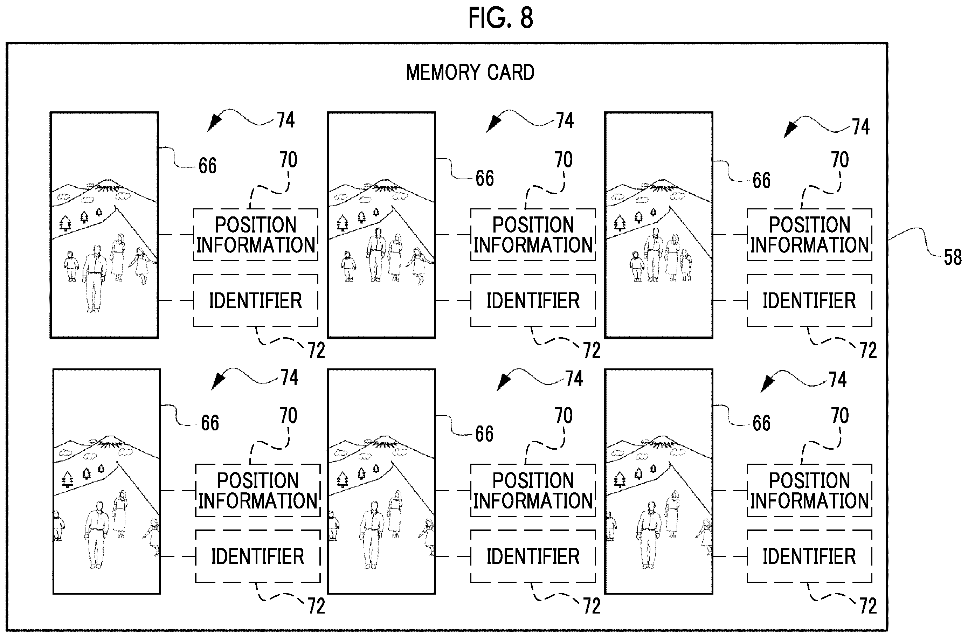

As shown in Fig. 8 as an example, the data set 74 is generated for each main exposure image 66 obtained by performing the interval imaging and is recorded on the memory card 58. In the example shown in Fig. 8, for convenience of description, an aspect example in which six data sets 74 corresponding to six main exposure images 66 obtained by performing the interval imaging are recorded on the memory card 58 is shown, but this is merely an example, and the number of the data sets 74 recorded on the memory card 58 may naturally be less than six or may be seven or more.

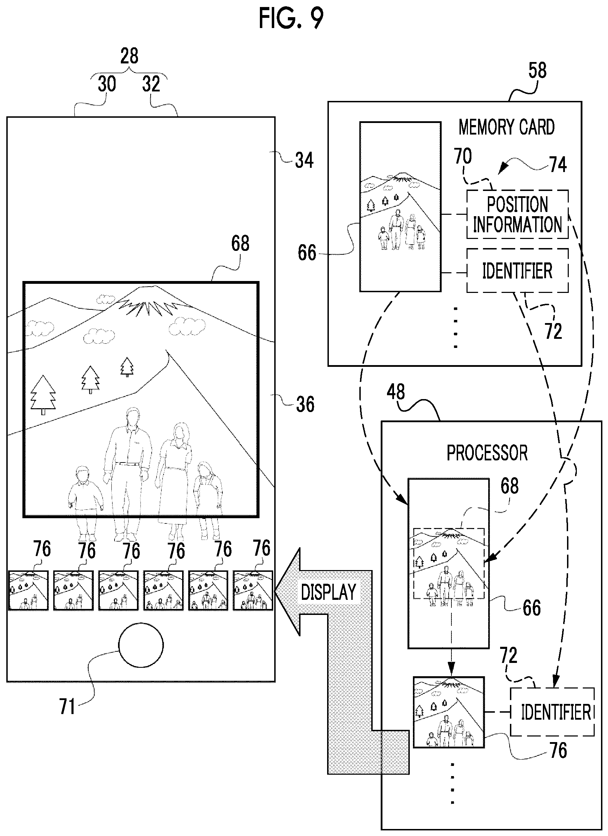

As shown in Fig. 9 as an example, in a case in which the data set 74 is recorded on the memory card 58, the processor 48 acquires the data set 74 from the memory card 58. Then, the processor 48 allocates the recommended region 68 based on the position information 70 associated with the main exposure image 66 to the main exposure image 66 included in the data set 74. The recommended region 68 based on the position information 70 refers to the recommended region 68 reproduced at the position indicated by the position information 70 in the main exposure image 66. The processor 48 cuts out a part of the recommended region 68 from the main exposure image 66 and reduces the size of the cut-out part to generate a thumbnail image 76. Here, the cut-out part of the recommended region 68 refers to a region surrounded by the recommended region 68 in the main exposure image 66. The thumbnail image 76 is an example of a "thumbnail image" according to the present disclosure.

The processor 48 associates the generated thumbnail image 76 with the identifier 72 associated with the main exposure image 66 on which the thumbnail image 76 is based. As a result, it is possible to manage which of the main exposure images 66 each thumbnail image 76 corresponds to in a distinguishable manner.

The processor 48 displays the thumbnail images 76 generated for each data set 74 in the above-described manner in time series at the bottom of the screen 34. In the example shown in Fig. 9, a plurality of the thumbnail images 76 are linearly arranged and superimposed and displayed at the bottom of the live view image 36.

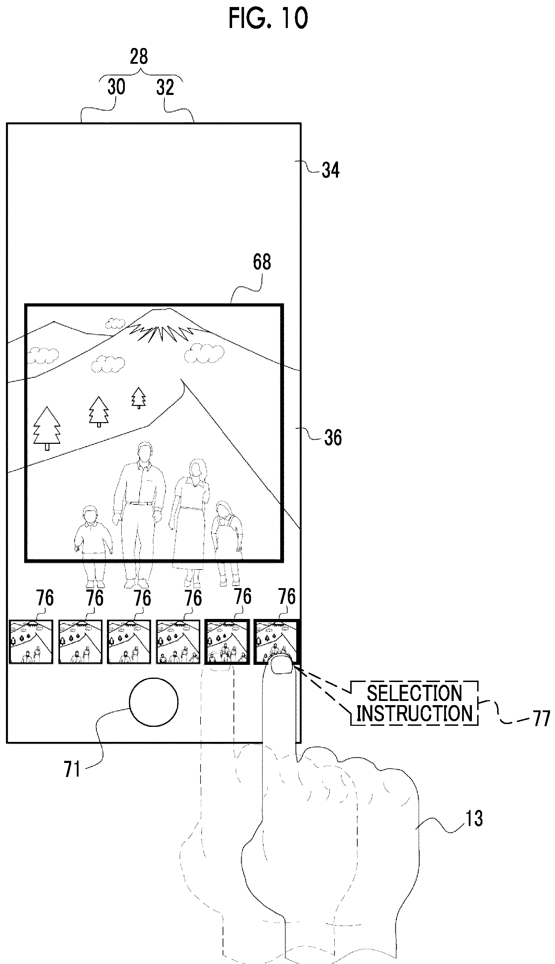

As shown in Fig. 10 as an example, a selection instruction 77 is given to the smart device 12. The selection instruction 77 is an instruction accompanying an operation (for example, a tap on the touch panel 32) of the user 13. In the example shown in Fig. 10, the thumbnail image 76 is selected from the plurality of thumbnail images 76 displayed on the screen 34 in response to the selection instruction 77 from the user 13. In the example shown in Fig. 10, two thumbnail images 76 corresponding to the latest two main exposure images 66 obtained by the interval imaging are selected in response to the selection instruction 77. The selection instruction 77 is an example of an "extraction instruction" and a "selection instruction" according to the present disclosure.

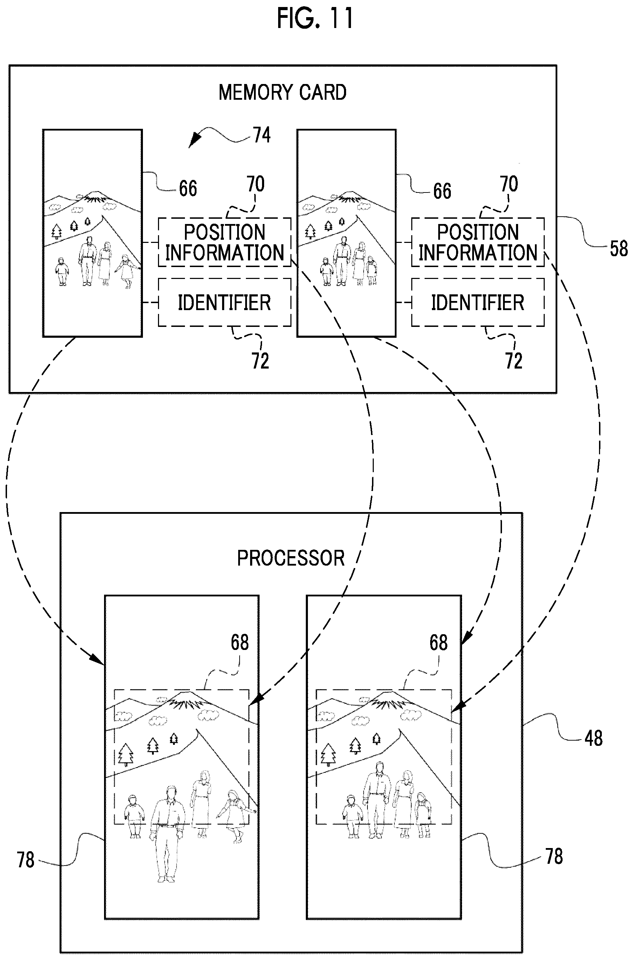

As shown in Fig. 11 as an example, the processor 48 specifies the data sets 74 including the main exposure images 66 corresponding to the thumbnail images 76 selected in response to the selection instruction 77, and acquires the specified data set 74 from the memory card 58. The specification of the data set 74 is realized by comparing the identifier 72 associated with the thumbnail image 76 with the identifier 72 associated with the main exposure image 66.

The processor 48 acquires a selected image 78 from the specified data set 74. The selected image 78 refers to the main exposure image 66 corresponding to the thumbnail image 76 selected from the plurality of thumbnail images 76 in response to the selection instruction 77. In the example shown in Fig. 11, the processor 48 acquires, from the data set 74, the main exposure image 66 included in the specified data set 74 as the selected image 78.

The processor 48 allocates, to the selected image 78 acquired from the data set 74, the recommended region 68 (that is, the recommended region 68 reproduced at the position indicated by the position information 70) based on corresponding position information 70 (for example, the position information 70 associated with the selected image 78). The method of allocating the recommended region 68 to the selected image 78 is the same as the example shown in Fig. 9 (that is, the method of allocating the recommended region 68 to the main exposure image 66).

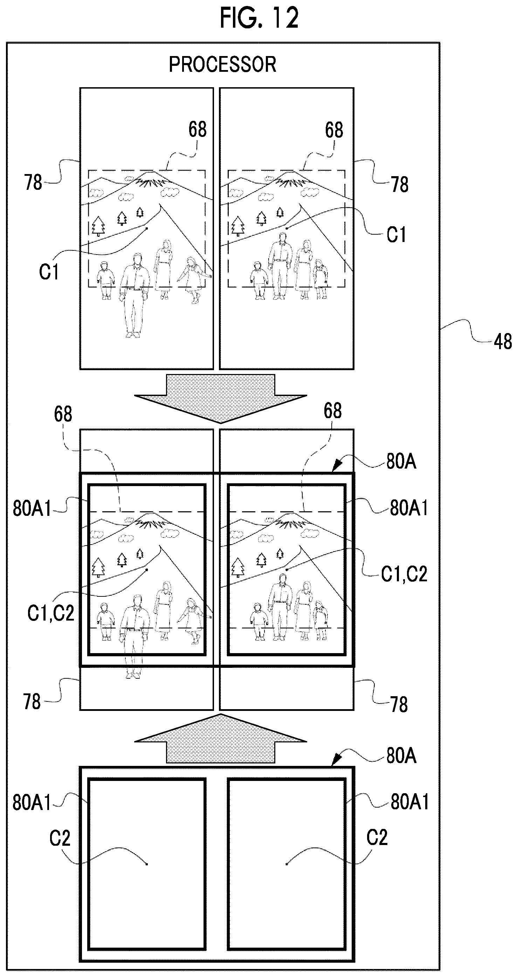

In the example shown in Fig. 11, a corresponding recommended region 68 is assigned to each of two selected images 78. Therefore, as shown in Fig. 12 as an example, the processor 48 acquires a layout frame image 80A applied to the two selected images 78. The layout frame image 80A is an image including two layout frames 80A1. In the layout frame image 80A, the two layout frames 80A1 are disposed side by side in a right-left direction in front view with respect to the screen 34. The layout frame 80A1 is a vertically long frame in front view with respect to the screen 34. The position and the size of the layout frame 80A1 in the layout frame image 80A are fixed.

The processor 48 allocates the two selected images 78 to the two layout frames 80A1 in the layout frame image 80A. In this case, a positional relationship between the recommended region 68 allocated to the selected image 78 and the layout frame 80A1 is such that a portion of the subject that is shown in at least a central portion of the recommended region 68 is disposed in a central portion of the layout frame 80A1. In the example shown in Fig. 12, the selected image 78 is allocated to the layout frame 80A1 such that a center C1 of the recommended region 68 matches a center C2 of the layout frame 80A1.

However, in a case in which the selected image 78 is allocated to the layout frame 80A1 in this way, the selected image 78 protrudes from the layout frame 80A1.

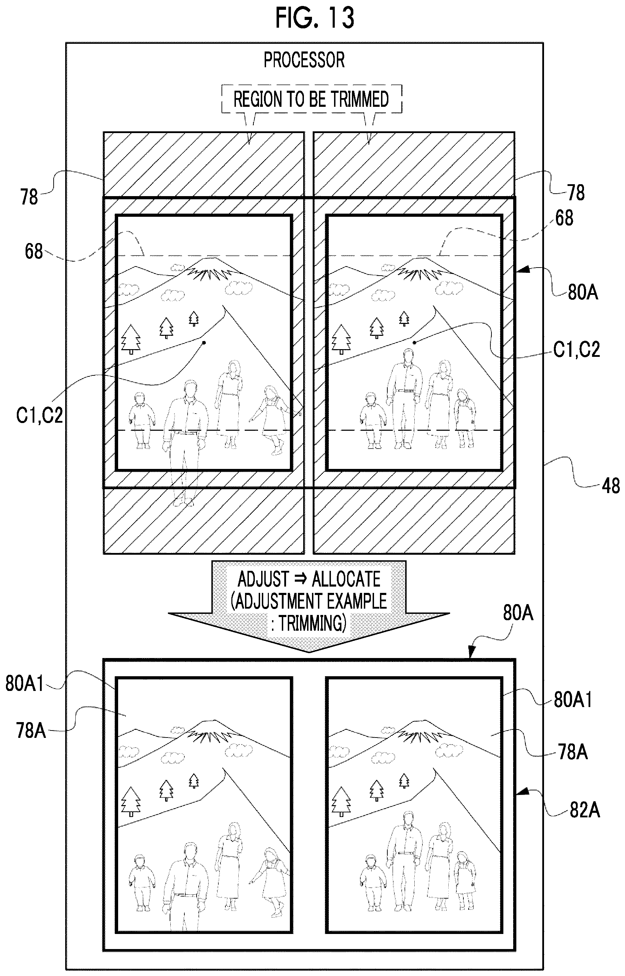

Therefore, as shown in Fig. 13 as an example, the processor 48 generates two adjusted images 78A based on the two selected images 78 allocated to the layout frame image 80A. The selected image 78 is an example of a "captured image" according to the present disclosure. The adjusted image 78A is an example of an "adjusted image" according to the present disclosure.

The adjusted image 78A is an image obtained by adjusting the size of a corresponding selected image 78 to a size such that an image region (for example, an image region at a position corresponding to at least the central portion (for example, the center) of the recommended region 68 in the selected image 78) at a position corresponding to the position of the recommended region 68 in the selected image 78 fits within the layout frame 80A1. In the present embodiment, the position of the recommended region 68 in the selected image 78 is defined by the position information 70 associated with the selected image 78. Therefore, it can be said that the adjusted image 78A is an image obtained by adjusting the size of a corresponding selected image 78 to a size such that the image region at the position corresponding to the position of the recommended region 68 in the selected image 78 fits within the layout frame 80A1, in accordance with the position information 70 associated with the selected image 78.

The adjustment of the size of the selected image 78 is realized by adjusting the width of the selected image 78 (that is, the length of the selected image 78 in the horizontal direction in front view with respect to the screen 34) according to the width of the layout frame 80A1 (that is, the length of the layout frame 80A1 in the horizontal direction in front view with respect to the screen 34) and adjusting the height of the selected image 78 (that is, the length of the selected image 78 in the vertical direction in front view with respect to the screen 34) according to the height of the layout frame 80A1 (that is, the length of the layout frame 80A1 in the vertical direction in front view with respect to the screen 34).

In the example shown in Fig. 13, a form example in which both the width and the height of the selected image 78 are adjusted is described, but, as long as the image region at the position corresponding to the position of the recommended region 68 in the selected image 78 fits within the layout frame 80A1 by adjusting one of the width and the height of the selected image 78, it is sufficient to adjust one of the width and the height of the selected image 78.

The adjustment of the size of the selected image 78 is realized by trimming the selected image 78. In the example shown in Fig. 13, the width and the height of the selected image 78 are trimmed to match the width and the height of the layout frame 80A1. Here, the trimming is exemplified, but this is merely an example, and, as long as the image region at the position corresponding to the position of the recommended region 68 in the selected image 78 fits within the layout frame 80A1, the size of the selected image 78 may be reduced to obtain the adjusted image 78A, or the adjusted image 78A may be obtained by performing both the trimming and the size reduction.

In addition, the adjusted image 78A is also an image obtained by adjusting the shape of the selected image 78 to match the shape of the layout frame 80A1 (in the example shown in Fig. 13, a vertically long rectangular shape in front view with respect to the screen 34). In the example shown in Fig. 13, since the shape of the layout frame 80A1 is a vertically long rectangle in front view with respect to the screen 34, the shape of the selected image 78 is also adjusted to a vertically long rectangle in front view with respect to the screen 34. Meanwhile, in a case in which the shape of the layout frame 80A1 is a triangle, the shape of the selected image 78 is also adjusted to a triangle having the same shape as the shape of the layout frame 80A1, and, in a case in which the shape of the layout frame 80A1 is a circle, the shape of the selected image 78 is also adjusted to a circle having the same shape as the shape of the layout frame 80A1. In this manner, in the adjusted image 78A, the size and shape of the selected image 78 are adjusted to match the size and shape of the layout frame 80A1.

The processor 48 generates a layout image 82A by allocating each of the two adjusted images 78A to a corresponding layout frame 80A1. The subject that fits within the recommended region 68 is shown in each layout frame 80A1 of the layout image 82A obtained in this way.

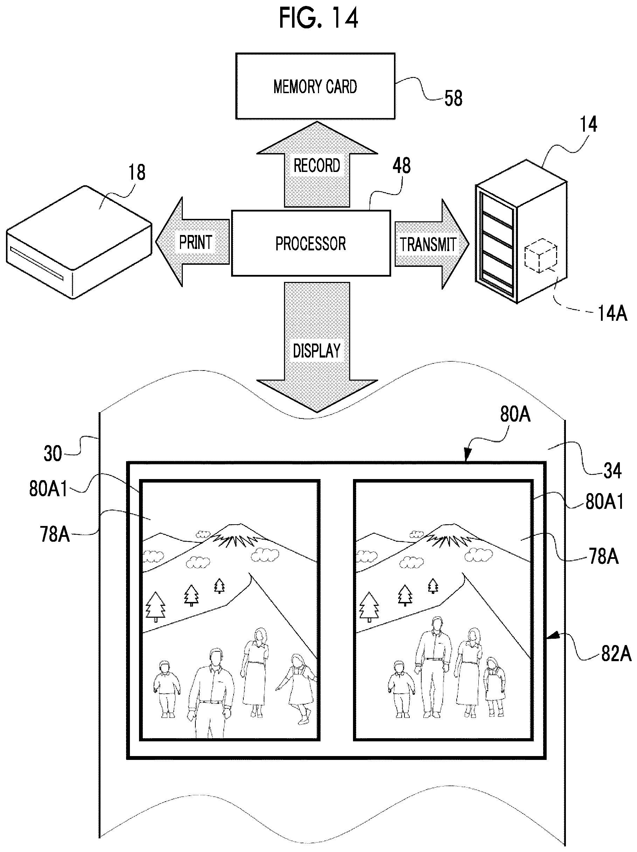

As shown in Fig. 14 as an example, the processor 48 outputs the two adjusted images 78A in a selected layout. That is, the processor 48 outputs the layout image 82A. Examples of an output destination of the layout image 82A include the server 14, the printing device 18, the display 30, and the memory card 58. In this case, the processor 48 transmits the layout image 82A to the server 14. The server 14 records the layout image 82A on a recording medium 14A (for example, a flash memory and/or a hard disk). In addition, the processor 48 causes the printing device 18 to print the layout image 82A. In addition, the processor 48 displays the layout image 82A on the screen 34. Further, the processor 48 records the layout image 82A on the memory card 58.

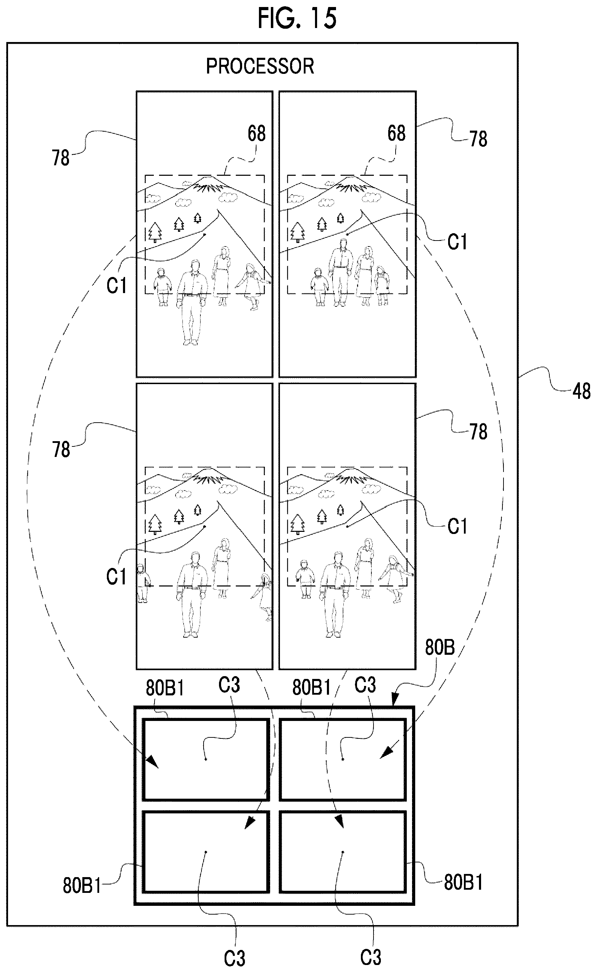

In the example shown in Figs. 10 to 13, a form example in which two adjusted images 78A are generated based on two selected images 78, and each of the two adjusted images 78A is allocated to a corresponding layout frame 80A1 to generate the layout image 82A is described, but this is merely an example. For example, as shown in Figs. 15 to 17, four adjusted images 78B may be generated based on four selected images 78, and each of the four adjusted images 78B may be allocated to a corresponding layout frame 80B1 in a layout frame image 80B to generate the layout image 82B. In this case as well, the layout image 82B is generated in the same manner as in the example shown in Figs. 10 to 13.

For example, as shown in Fig. 15, in a case in which four thumbnail images 76 are selected in response to the selection instruction 77 (see Fig. 10), the processor 48 acquires four main exposure images 66 corresponding to the four selected thumbnail images 76 as four selected images 78. Then, the processor 48 acquires the layout frame image 80B to be applied to the four selected images 78. The layout frame image 80B is an image including four layout frames 80B1. In the layout frame image 80B, the four layout frames 80B1 are arranged in a length × width = 2 × 2 arrangement. The layout frame 80B1 is a laterally long frame in front view with respect to the screen 34.

The processor 48 allocates the four selected images 78 to the four layout frames 80B1 in the layout frame image 80B. In this case, a positional relationship between the recommended region 68 allocated to the selected image 78 and the layout frame 80B1 is such that a portion of the subject that is shown in at least a central portion of the recommended region 68 is disposed in a central portion of the layout frame 80B1. In the example shown in Fig. 15, the selected image 78 is allocated to the layout frame 80B1 such that the center C1 of the recommended region 68 matches a center C3 of the layout frame 80B1.

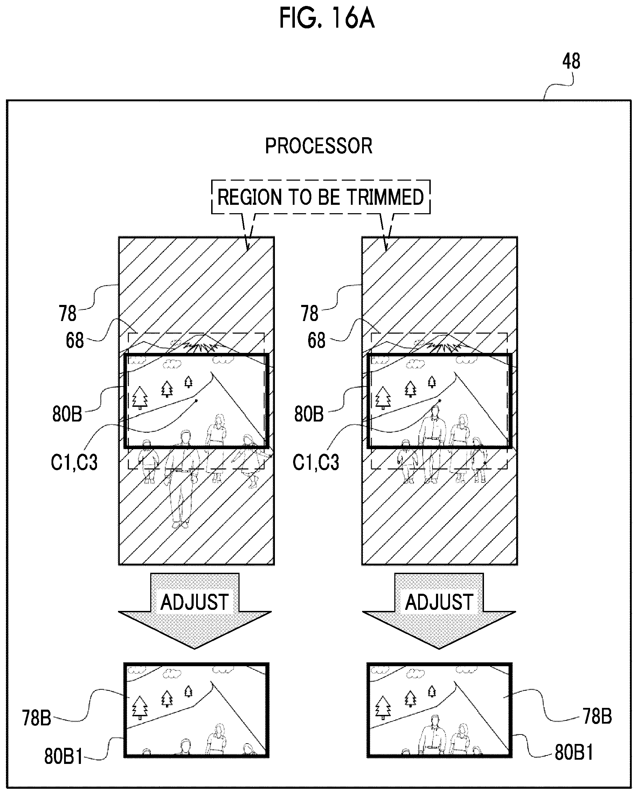

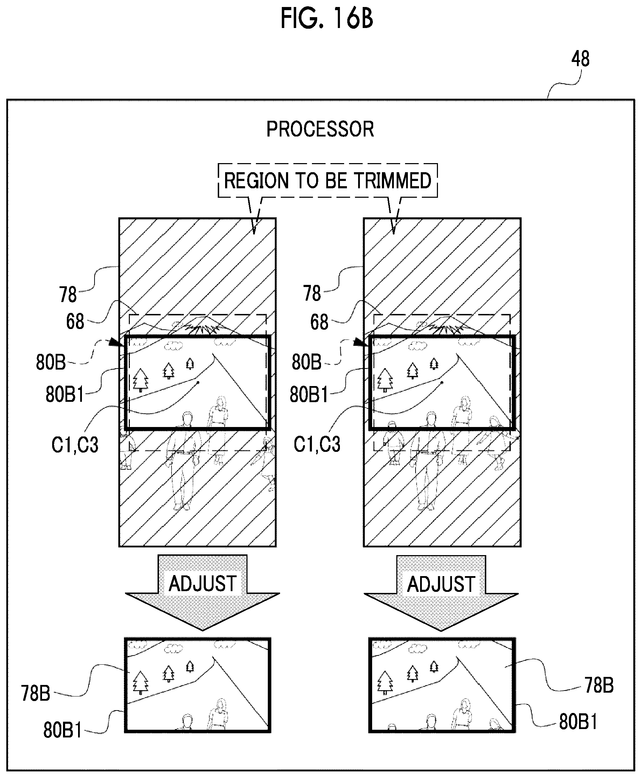

As shown in Figs. 16A and 16B as an example, the processor 48 generates four adjusted images 78B based on the four selected images 78 allocated to the layout frame image 80B. The adjusted image 78B is an example of an "adjusted image" according to the present disclosure.

The adjusted image 78B is an image obtained by adjusting the size of a corresponding selected image 78 to a size such that the image region at the position corresponding to the position of the recommended region 68 in the selected image 78 fits within the layout frame 80B1.

The adjustment of the size of the selected image 78 is realized by adjusting the width of the selected image 78 according to the width of the layout frame 80B1 and adjusting the height of the selected image 78 according to the height of the layout frame 80B1. In the example shown in Figs. 16A and 16B, a form example in which both the width and the height of the selected image 78 are adjusted is described, but, as long as the image region at the position corresponding to the position of the recommended region 68 in the selected image 78 fits within the layout frame 80B1 by adjusting one of the width and the height of the selected image 78, it is sufficient to adjust one of the width and the height of the selected image 78.

In the examples shown in Figs. 16A and 16B, the width and the height of the selected image 78 are trimmed to match the width and the height of the layout frame 80B1. Here, the trimming is exemplified, but this is merely an example, and, as long as the image region at the position corresponding to the position of the recommended region 68 in the selected image 78 fits within the layout frame 80B1, the size of the selected image 78 may be reduced to obtain the adjusted image 78B, or the adjusted image 78B may be obtained by performing both the trimming and the size reduction.

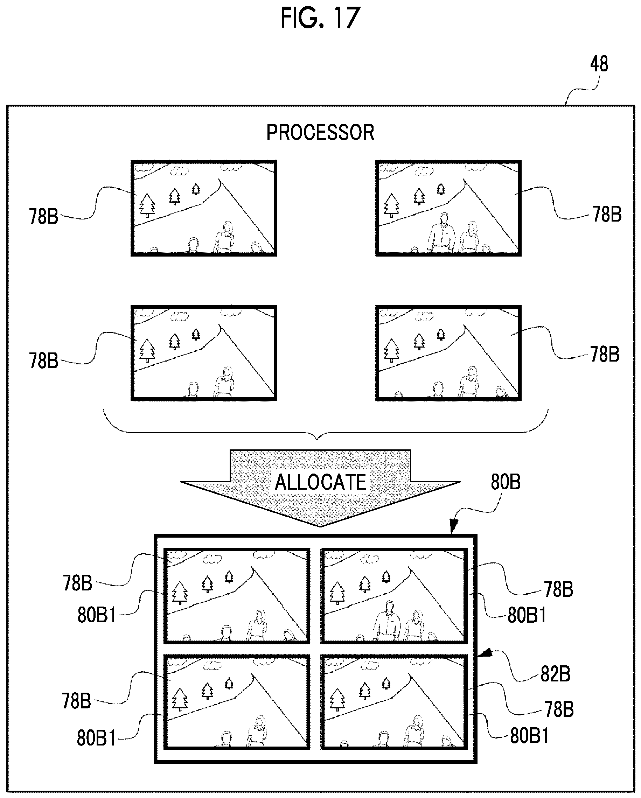

As shown in Fig. 17 as an example, the processor 48 generates a layout image 82B by allocating each of six adjusted images 78B to a corresponding layout frame 80B1. The subject that fits within the recommended region 68 is shown in each layout frame 80B1 of the layout image 82B obtained in this way. In addition, the layout image 82B is also output by the processor 48 in the same manner as in the example shown in Fig. 14.

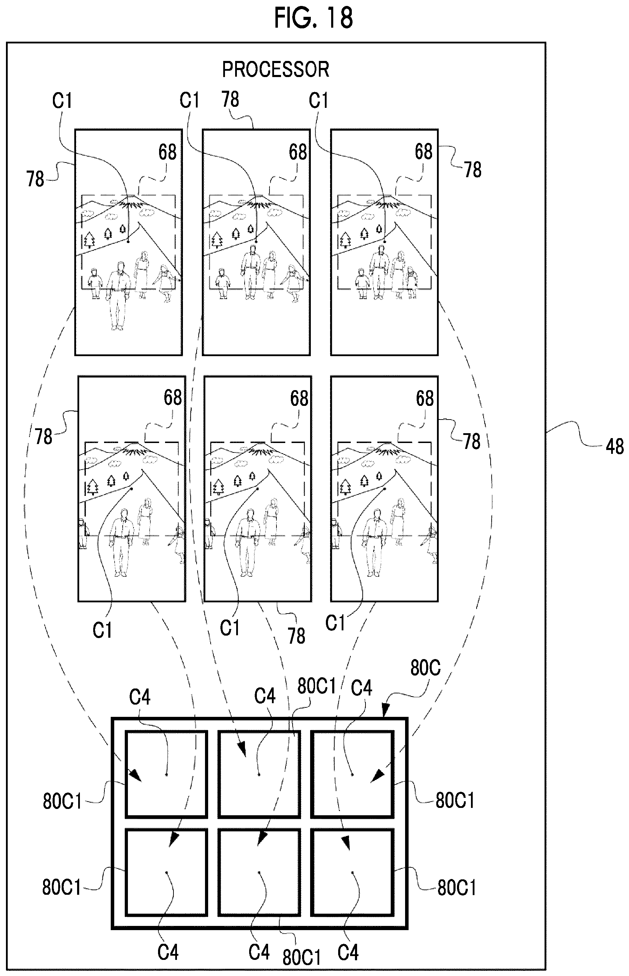

In the example shown in Figs. 15 to 17, a form example in which four adjusted images 78B are generated based on four selected images 78, and each of the four adjusted images 78B is allocated to a corresponding layout frame 80B1 to generate the layout image 82B is described, but this is merely an example. For example, as shown in Figs. 18 to 20, six adjusted images 78C may be generated based on six selected images 78, and each of the six adjusted images 78C may be allocated to a corresponding layout frame 80C1 in a layout frame image 80C to generate the layout image 82C. In this case as well, the layout image 82C is generated in the same manner as in the example shown in Figs. 15 to 17.

For example, as shown in Fig. 18, in a case in which six thumbnail images 76 are selected in response to the selection instruction 77 (see Fig. 10), the processor 48 acquires six main exposure images 66 corresponding to the six selected thumbnail images 76 as six selected images 78. Then, the processor 48 acquires the layout frame image 80C to be applied to the six selected images 78. The layout frame image 80C is an image including six layout frames 80C1. In the layout frame image 80C, the six layout frames 80C1 are arranged in a vertical × horizontal = 2 × 3 arrangement. The layout frame 80C1 is a laterally long frame in front view with respect to the screen 34.

The processor 48 allocates the six selected images 78 to the six layout frames 80C1 in the layout frame image 80C. In this case, a positional relationship between the recommended region 68 allocated to the selected image 78 and the layout frame 80C1 is such that a portion of the subject that is shown in at least a central portion of the recommended region 68 is disposed in a central portion of the layout frame 80C1. In the example shown in Fig. 18, the selected image 78 is allocated to the layout frame 80C1 such that the center C1 of the recommended region 68 matches a center C4 of the layout frame 80C1.

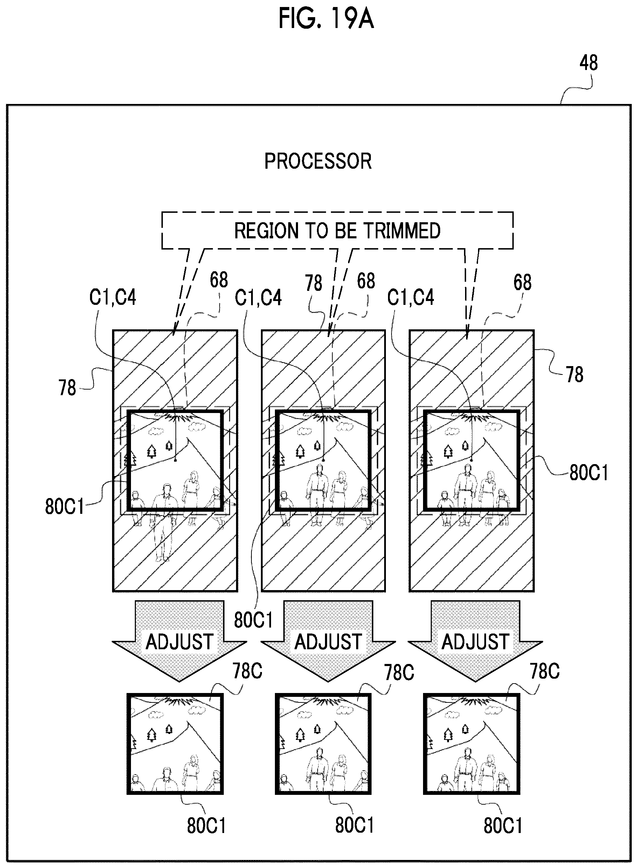

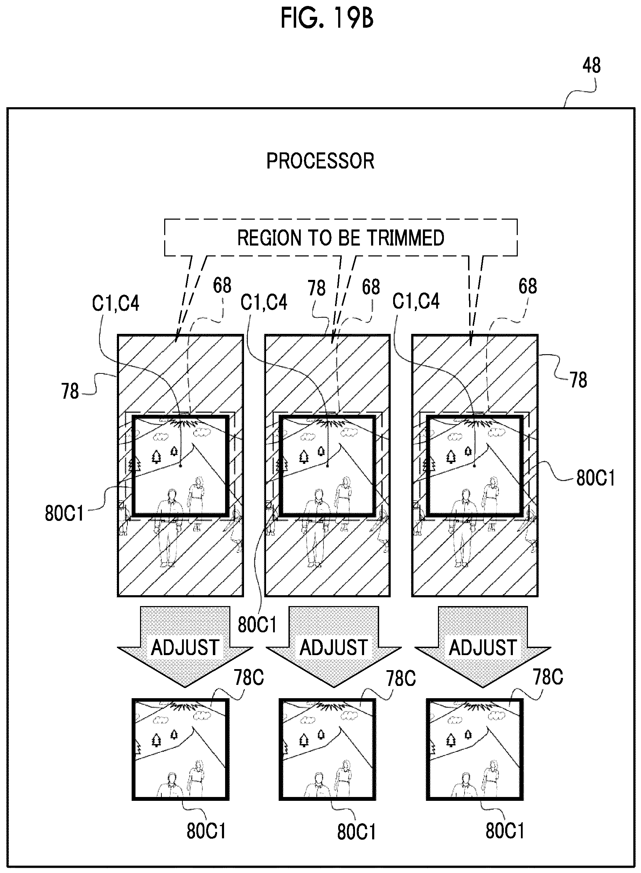

As shown in Figs. 19A and 19B as an example, the processor 48 generates six adjusted images 78C based on the six selected images 78 allocated to the layout frame image 80C. The adjusted image 78C is an example of an "adjusted image" according to the present disclosure.

The adjusted image 78C is an image obtained by adjusting the size of a corresponding selected image 78 to a size such that the image region at the position corresponding to the position of the recommended region 68 in the selected image 78 fits within the layout frame 80C1.

The adjustment of the size of the selected image 78 is realized by adjusting the width of the selected image 78 according to the width of the layout frame 80C1 and adjusting the height of the selected image 78 according to the height of the layout frame 80C1. In the example shown in Figs. 19A and 19B, a form example in which both the width and the height of the selected image 78 are adjusted is described, but, as long as the image region at the position corresponding to the position of the recommended region 68 in the selected image 78 fits within the layout frame 80C1 by adjusting one of the width and the height of the selected image 78, it is sufficient to adjust one of the width and the height of the selected image 78.

In the examples shown in Figs. 19A and 19B, the width and the height of the selected image 78 are trimmed to match the width and the height of the layout frame 80C1. Here, the trimming is exemplified, but this is merely an example, and, as long as the image region at the position corresponding to the position of the recommended region 68 in the selected image 78 fits within the layout frame 80C1, the size of the selected image 78 may be reduced to obtain the adjusted image 78C, or the adjusted image 78C may be obtained by performing both the trimming and the size reduction.

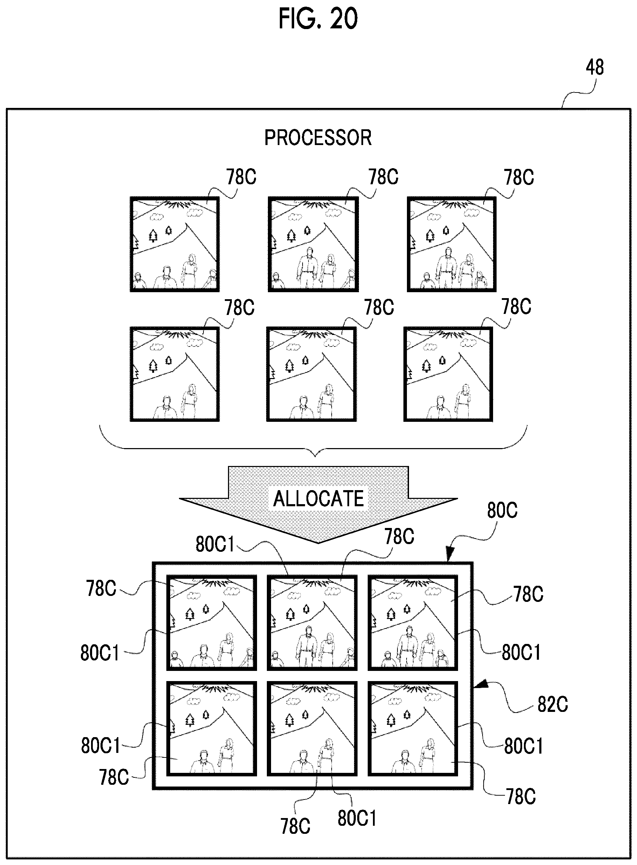

As shown in Fig. 20 as an example, the processor 48 generates a layout image 82C by allocating each of six adjusted images 78C to a corresponding layout frame 80C1. The subject that fits within the recommended region 68 is shown in each layout frame 80C1 of the layout image 82C obtained in this way. In addition, the layout image 82C is also output by the processor 48 in the same manner as in the example shown in Fig. 14.

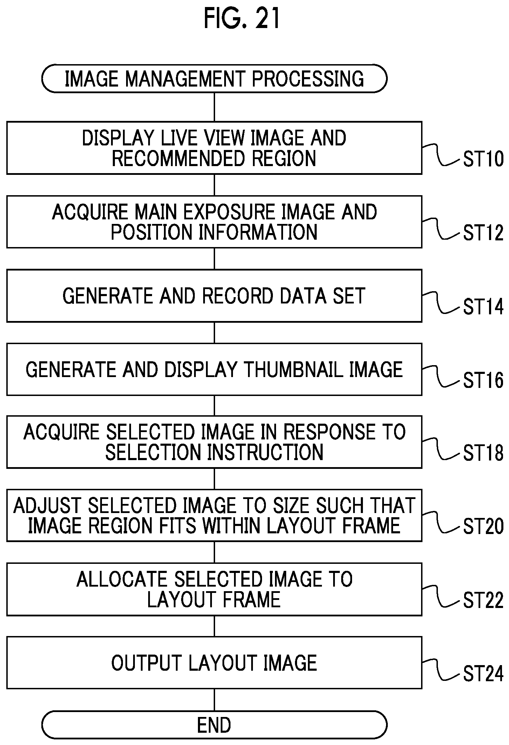

Next, an example of a flow of main processing included in the image management processing 62 of the smart device 12 will be described with reference to Fig. 21. A plurality of processes shown in the flowchart of Fig. 21 are examples of an "image processing method" according to the present disclosure. In the following, for convenience of description, the description will be made on the premise that the live view imaging is being performed by the imaging apparatus 26.

In step ST10 shown in Fig. 21, the processor 48 displays the live view image 36 on the screen 34, and superimposes and displays the recommended region 68 on the central portion of the live view image 36 (see Fig. 7). After the process of step ST10 is executed, the image management processing 62 proceeds to step ST12.

In step ST12, the processor 48 acquires the plurality of main exposure images 66 obtained by performing the interval imaging in response to the interval imaging instruction and the position information 70 related to the recommended region 68 applied to each main exposure image 66 (see Fig. 7). After the process of step ST12 is executed, the image management processing 62 proceeds to step ST14.

In step ST14, the processor 48 generates a plurality of data sets 74 corresponding to the plurality of main exposure images 66 acquired in step ST12 and records the plurality of data sets 74 on the memory card 58 (see Figs. 7 and 8). After the process of step ST14 is executed, the image management processing 62 proceeds to step ST16.

In step ST16, the processor 48 generates a plurality of thumbnail images 76 based on the plurality of data sets 74 recorded on the memory card 58 and displays the plurality of thumbnail images 76 on the screen 34 (see Fig. 9). After the process of step ST16 is executed, the image management processing 62 proceeds to step ST18.

In step ST18, the processor 48 acquires the plurality of main exposure images 66 corresponding to the plurality of thumbnail images 76 selected in accordance with the selection instruction 77 as the plurality of selected images 78 (see Figs. 10 and 11). Each selected image 78 is allocated to a corresponding layout frame 80A1 in the layout frame image 80A. In this case, the selected image 78 is allocated to the layout frame 80A1 such that the center C1 of the recommended region 68 reproduced in accordance with the position information 70 associated with the selected image 78 matches the center C2 of the layout frame 80A1 (see Fig. 12). After the process of step ST18 is executed, the image management processing 62 proceeds to step ST20.

In step ST20, the processor 48 generates the adjusted image 78A by adjusting the size of each selected image 78 such that it fits within each layout frame 80A1 (see Fig. 13). In this case, the shape of each selected image 78 is also adjusted to match the shape of each layout frame 80A1. The adjustment of the size and the shape is realized by trimming and/or size reduction. After the process of step ST20 is executed, the image management processing 62 proceeds to step ST22.

In step ST22, the processor 48 generates the layout image 82A by allocating each adjusted image 78A generated in step ST20 to a corresponding layout frame 80A1 in the layout frame image 80A (see Fig. 13). After the process of step ST22 is executed, the image management processing 62 proceeds to step ST24.

In step ST24, the processor 48 outputs the layout image 82A to a predetermined output destination such as the server 14, the printing device 18, the display 30, and the memory card 58 (see Fig. 14). After the process of step ST24 is executed, the image management processing 62 ends.

As described above, in the present embodiment, the live view image 36 is displayed on the screen 34, and the recommended region 68 is displayed in the live view image 36. The recommended region 68 is a region indicating a position in the live view image 36 at which the subject shown in the live view image 36 is recommended to be located. Therefore, for example, in the recommended region 68 displayed in the live view image 36, the subject intended by the user 13 can fit within the layout frame 80A1 through a guidance instruction for the subject from the user 13 and/or the adjustment of the angle of view and/or the composition by the user 13. In a state where the recommended region 68 is displayed in the live view image 36, the plurality of selected images 78 each having an outer edge larger than an outer edge of the recommended region 68 are acquired. Then, the plurality of adjusted images 78A based on the plurality of selected images 78 obtained by performing the interval imaging are output in a selected layout (for example, a layout of two layout frames 80A1 included in the layout image 82A). At least a part of the subject included in the recommended region 68 is shown in the adjusted image 78A. Accordingly, it is possible to obtain the plurality of adjusted images 78A in which the subject in the recommended region 68 is shown at an appropriate position in a selected layout, compared to a case in which the main exposure image 66 obtained by performing the interval imaging is simply allocated to the layout frame 80A1 without using the recommended region 68.

In addition, in the present embodiment, as the adjusted image 78A, an image obtained by adjusting the size of a corresponding selected image 78 to a size such that the image region at the position corresponding to the position of the recommended region 68 in the selected image 78 fits within the layout frame 80A1 in the layout image 82A is used. Accordingly, the image region at the position corresponding to the position of the recommended region 68 in the selected image 78 can fit within the layout frame 80A1 in the layout image 82A.

In addition, in the present embodiment, the adjustment of the size of the selected image 78 is realized by adjusting the width of the selected image 78 according to the width of the layout frame 80A1 and/or adjusting the height of the selected image 78 according to the height of the layout frame 80A1. Accordingly, the image region at the position corresponding to the position of the recommended region 68 in the selected image 78 can be adjusted to match the width and/or the height of the layout frame 80A1 in the layout image 82A.

In addition, in the present embodiment, the adjustment of the size of the selected image 78 is realized by trimming the selected image 78 and/or reducing the size of the selected image 78. Accordingly, it is possible to realize the adjustment of the size of the selected image 78, compared to a case in which the selected image 78 is neither trimmed not reduced in size.

In addition, in the present embodiment, as the adjusted image 78A, an image obtained by adjusting the size of the selected image 78 to a size matching the size of the layout frame 80A1 and adjusting the shape of the selected image 78 to a shape matching the shape of the layout frame 80A1 is used. Accordingly, since the size and the shape of the layout frame 80A1 match the size and the shape of the adjusted image 78A, the adjusted image 78A can be allocated to the layout frame 80A1 (in other words, can be fitted into the layout frame 80A1).

In addition, in the present embodiment, as the positional relationship between the recommended region 68 and the layout frame 80A1, a positional relationship in which a portion of the subject that is shown in at least the central portion of the recommended region 68 (in the example shown in Figs. 12 and 13, the center C1) is disposed in the central portion of the layout frame 80A1 (in the example shown in Figs. 12 and 13, the center C2) is used. Accordingly, the portion that is shown in at least the central portion of the recommended region 68 can be positioned at the central portion of the layout frame 80A1.

In addition, in the present embodiment, as the adjusted image 78A, an image obtained by adjusting the size of the selected image 78 to a size such that the selected image 78 fits within the layout frame 80A1 in accordance with the position information 70 indicating the position of the recommended region 68 in the selected image 78 is used. Accordingly, the adjusted image 78A can be obtained that has a size such that the subject shown in the recommended region 68 fits within the layout frame 80A1.

In addition, in the present embodiment, the main exposure image 66 and the position information 70 are recorded on the memory card 58 in a state of being associated with each other. The main exposure image 66 recorded on the memory card 58 is extracted from the memory card 58 as the selected image 78 in response to the selection instruction 77 given by the user 13, and the position information 70 associated with the main exposure image 66 is also extracted from the memory card 58. Then, the size of the selected image 78 is adjusted to a size such that the image region at the position corresponding to the position of the recommended region 68 in the selected image 78 fits within the layout frame 80A1 in the layout image 82A, in accordance with the position information 70 associated with the selected image 78. Accordingly, after the main exposure image 66 is obtained, the user 13 can adjust the size of the selected image 78 to a size in which the image region at the position corresponding to the position of the recommended region 68 in the selected image 78 is included in the layout frame 80A1 in the layout image 82A at the timing intended by the user 13.

In addition, in the present embodiment, as the adjusted image 78A, an image obtained by adjusting the size of a corresponding selected image 78 to a size such that the image region at the position corresponding to the position of the recommended region 68 in the selected image 78 fits within the layout frame 80A1 in the layout image 82A is used. The layout frame 80A1 is a vertically long frame in front view with respect to the screen 34. Accordingly, the image region at the position corresponding to the position of the recommended region 68 in the selected image 78 can fit within the layout frame 80A1 which is a vertically long frame in front view with respect to the screen 34 in the layout image 82A.

In addition, in the present embodiment, a square region is used as the recommended region 68. Accordingly, it is possible to lay out the image region at the position corresponding to the position of the recommended region 68 in the selected image 78 at an appropriate position for any of the layout frames 80A1, 80B1, and 80C1, compared to a case in which the shape of the recommended region 68 is a vertically long rectangular region or a laterally long rectangular region.

In addition, in the present embodiment, the size of a main exposure image 66 selected from the plurality of main exposure images 66 recorded on the memory card 58 in response to the selection instruction 77 from the user 13 is adjusted, and the adjusted image 78A obtained by the size adjustment is allocated to the layout frame 80A1. Accordingly, the layout image 82A in which the adjusted image 78A obtained by adjusting the size of the main exposure image 66 intended by the user 13 is laid out can be obtained.

In addition, in the present embodiment, the thumbnail image 76 that the user 13 desires to use for the layout is selected from the plurality of thumbnail images 76 displayed on the screen 34 in response to the selection instruction 77, and the main exposure image 66 corresponding to the selected thumbnail image 76 is set as the selected image 78. Then, the adjusted image 78A obtained by adjusting the size of the selected image 78 is allocated to the layout frame 80A1. Accordingly, the user 13 can easily select the main exposure image 66 that the user 13 desires to use for the layout, as the selected image 78. As a result, the adjusted image 78A obtained by adjusting the size of the selected image 78 desired by the user 13 can be laid out on the layout image 82A.

In the above-described embodiment, the layout frame images 80A, 80B, and 80C are exemplified, but layout frame images other than these may be used. For example, a layout frame image in which a plurality of layout frames having different shapes depending on films or models, such as mini, wide, and square, are laid out may be used.

In the above-described embodiment, a form example in which the recommended region 68 is fixed at a certain location (for example, the central portion) in the live view image 36 has been described, but the position of the recommended region 68 may be changed in response to a given instruction and/or various conditions. For example, the position of the recommended region 68 in the live view image 36 may be changed in response to an instruction given by the user 13 to the smart device 12. In addition, for example, the position of the recommended region 68 in the live view image 36 may be changed to follow a specific subject (for example, a physical object designated in advance) recognized by performing AI-based physical object recognition processing (for example, physical object recognition processing using a trained model obtained by training a model such as a neural network through machine learning so that a specific subject is recognized) and/or non-AI-based physical object recognition processing (for example, physical object recognition processing of a template matching type capable of recognizing a specific subject) on the live view image 36.

In the above-described embodiment, a form example in which the size of the recommended region 68 in the live view image 36 is fixed has been described, but the size of the recommended region 68 in the live view image 36 may be changed in response to a given instruction and/or various conditions. For example, the position of the recommended region 68 in the live view image 36 may be changed in response to an instruction given by the user 13 to the smart device 12. In addition, for example, the size of the recommended region 68 in the live view image 36 may be changed according to the size and/or the type of the specific subject recognized by performing the AI-based or non-AI-based physical object recognition processing described above.

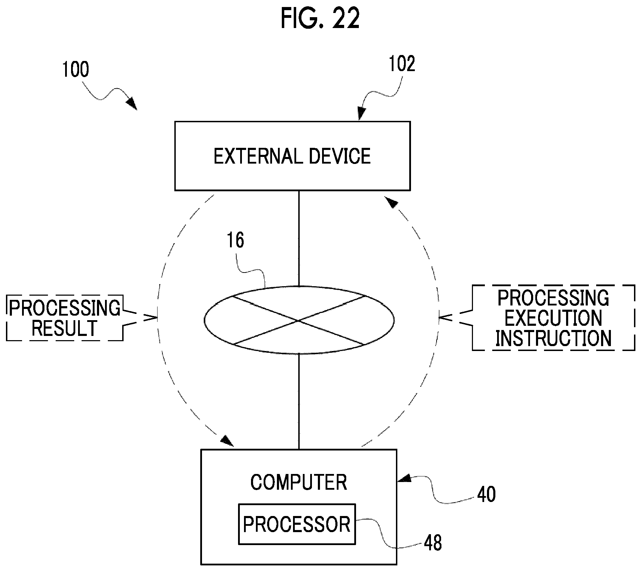

In the above-described embodiment, a form example in which the image management processing 62 is performed by the computer 40 has been described, but the present disclosure is not limited to this. At least a part of processing included in the image management processing 62 may be performed by a device provided outside the computer 40. Hereinafter, an example of this case will be described with reference to Fig. 22.

Fig. 22 is a conceptual diagram showing an example of a configuration of an image management system 100. In the example shown in Fig. 22, the image management system 100 is an example of an "image processing device" according to the present disclosure.

The image management system 100 comprises the computer 40 and an external device 102. For example, the external device 102 is a server and is communicably connected to the computer 40 via the network 16 (for example, a WAN and/or a LAN). Although a server is exemplified here, at least one personal computer or the like may be used as the external device 102 instead of the server.

An example of the external device 102 is at least one server that directly or indirectly transmits data to or receives data from the computer 40 via the network 16. The external device 102 receives a processing execution instruction given by the processor 48 of the computer 40 via the network 16. Then, the external device 102 executes processing according to the received processing execution instruction and transmits a processing result to the computer 40 via the network 16. In the computer 40, the processor 48 receives the processing result transmitted from the external device 102 via the network 16 and executes processing using the received processing result.

Examples of the processing execution instruction include an instruction to cause the external device 102 to execute at least a part of the image management processing 62. A first example of at least the part of the image management processing 62 (that is, processing executed by the external device 102) is processing of generating the data set 74. In this case, the external device 102 executes the processing of generating the data set 74 in response to the processing execution instruction given by the processor 48 via the network 16, and transmits a first processing result (for example, the data set 74), which is a processing result, to the computer 40 via the network 16. In the computer 40, the processor 48 receives the first processing result and executes the same processing as that in the above-described embodiment using the received first processing result.

A second example of at least the part of the image management processing (that is, processing executed by the external device 102) is processing of generating the thumbnail image 76. In this case, the external device 102 executes the processing of generating the thumbnail image 76 in response to the processing execution instruction given by the processor 48 via the network 16, and transmits a second processing result (for example, the thumbnail image 76), which is a processing result, to the computer 40 via the network 16. In the computer 40, the processor 48 receives the second processing result and executes the same processing as that in the above-described embodiment using the received second processing result.

A third example of at least the part of the image management processing (that is, processing executed by the external device 102) is processing of generating the adjusted image 78A. In this case, the external device 102 executes the processing of generating the adjusted image 78A in response to the processing execution instruction given by the processor 48 via the network 16, and transmits a third processing result (for example, the adjusted image 78A), which is a processing result, to the computer 40 via the network 16. In the computer 40, the processor 48 receives the third processing result and executes the same processing as that in the above-described embodiment using the received third processing result.

A fourth example of at least the part of the image management processing (that is, processing executed by the external device 102) is processing of generating the layout image 82A by laying out the adjusted image 78A on the layout frame image 80A. In this case, the external device 102 executes the processing of generating the layout image 82A by laying out the adjusted image 78A on the layout frame image 80A in response to the processing execution instruction given by the processor 48 via the network 16, and transmits a fourth processing result (for example, the layout image 82A), which is a processing result, to the computer 40 via the network 16. In the computer 40, the processor 48 receives the fourth processing result and executes the same processing as that in the above-described embodiment using the received fourth processing result.

The external device 102 may be implemented by cloud computing. The cloud computing is merely an example, and the external device 102 may be implemented by network computing such as fog computing, edge computing, or grid computing.

In the above-described embodiment, a form example in which the image management program 60 is stored in the storage 50 has been described, but the present disclosure is not limited to this. For example, the image management program 60 may be stored in a portable computer-readable non-transitory storage medium such as an SSD or a USB flash drive. The image management program 60 stored in the non-transitory storage medium is installed in the computer 40 of the smart device 12. The processor 48 executes the image management processing in accordance with the image management program 60.

In addition, the image management program 60 may be stored in a storage device such as another computer or a server connected to the smart device 12 via a network, and the image management program 60 may be downloaded in response to a request from the smart device 12 and installed in the computer 40.

It is not necessary to store the entirety of the image management program 60 in a storage device such as another computer or a server device connected to the smart device 12 or to store the entirety of the image management program 60 in the storage 50, and a part of the image management program 60 may be stored.

As a hardware resource that executes the image management processing, various processors described below can be used. Examples of the processors include a CPU which is a general-purpose processor functioning as the hardware resource for executing the image management processing by executing software, that is, a program. In addition, examples of the processor include a dedicated electric circuit which is a processor having a circuit configuration designed to be dedicated to executing specific processing, such as an FPGA, a PLD, or an ASIC. A memory is built in or connected to each processor, and each processor uses the memory to execute the image management processing.

The hardware resource for executing the image management processing may be configured of one of the various processors or may be configured of a combination of two or more processors of the same type or different types (for example, combination of a plurality of FPGAs or combination of CPU and FPGA). In addition, the hardware resource for executing the image management processing may be one processor.

As a configuring example of one processor, first, there is a form in which one processor is configured of a combination of one or more CPUs and software and the processor functions as the hardware resource for executing the image management processing. Secondly, as typified by an SoC, there is a form in which a processor that realizes functions of the entire system including the plurality of hardware resources for executing the image management processing with one IC chip is used. As described above, the image management processing is realized by using one or more of various processors as the hardware resource.

As a hardware structure of these various processors, more specifically, an electric circuit in which circuit elements such as semiconductor elements are combined can be used. In addition, the above image management processing is merely an example. Accordingly, it is possible to delete an unnecessary step, add a new step, or change a processing order without departing from the gist of the present disclosure.

The above-described contents and the above-shown contents are the detailed description of the parts according to the present disclosure, and are merely examples of the present disclosure. For example, description related to the above configurations, functions, actions, and effects is description related to an example of configurations, functions, actions, and effects of the parts relating to the present disclosure. Thus, it is needless to say that unnecessary parts may be deleted, new elements may be added, or replacement may be made to the content of the above description and the content of the drawings without departing from the gist of the present disclosure. In addition, in order to avoid complications and facilitate understanding of the parts according to the present disclosure, the description of common technical knowledge or the like, which does not particularly require the description for enabling the implementation of the present disclosure, is omitted in the above-described contents and the above-shown contents.

All documents, patent applications, and technical standards mentioned in the present specification are incorporated herein by reference to the same extent as in a case in which each document, each patent application, and each technical standard are specifically and individually described by being incorporated by reference.

## Claims

1. An image processing device (40, 100) comprising:
a processor (48),
wherein the processor (48) is configured to
display a live view image (36) on a screen (34),
display, in the live view image (36), a recommended region (68) indicating a recommended position in the live view image (36),
acquire a plurality of captured images (78) each having an outer edge larger than an outer edge of the recommended region (68) in a state where the recommended region (68) is displayed in the live view image (36), and
output a plurality of adjusted images (78A) based on the plurality of captured images (78) in a selected layout.

2. The image processing device (40, 100) according to claim 1,
wherein the adjusted image (78A) is an image obtained by adjusting a size of a corresponding captured image (78) to a size such that an image region at a position corresponding to a position of the recommended region (68) in the captured image (78) fits within a layout frame (80A1) in the layout.

3. The image processing device (40, 100) according to claim 2,
wherein the adjustment of the size of the captured image (78) is realized by adjusting a width of the captured image (78) according to a width of the layout frame (80A1) and/or adjusting a height of the captured image (78) according to a height of the layout frame (80A1).

4. The image processing device (40, 100) according to claim 2 or 3,
wherein the adjustment of the size of the captured image (78) is realized by trimming the captured image (78) and/or reducing the size of the captured image (78).

5. The image processing device (40, 100) according to any one of claims 2 to 5,
wherein the adjusted image (78A) is an image obtained by adjusting a shape of the captured image (78A) to match a shape of the layout frame (80A1).

6. The image processing device (40, 100) according to any one of claims 2 to 5,
wherein a positional relationship between the recommended region (68) and the layout frame (80A1) is such that a portion of a subject that is shown in at least a central portion of the recommended region is disposed in a central portion of the layout frame (80A1).

7. The image processing device (40, 100) according to any one of claims 2 to 5,
wherein the adjusted image (78A) is an image obtained by adjusting the size of the captured image (78) to a size such that the image region fits within the layout frame (80A1) in accordance with position information (70) indicating the position of the recommended region (68) in the captured image (78).

8. The image processing device (40, 100) according to claim 7,
wherein the captured image (78) and the position information (70) are recorded on a recording medium (58) in a state of being associated with each other,
the captured image (78) is extracted from the recording medium (58) in response to a given extraction instruction (77), and the position information (70) associated with the captured image (78) extracted from the recording medium (58) is extracted from the recording medium (58), and
the adjusted image (78A) is an image obtained by adjusting the size of the captured image (78) extracted from the recording medium (58) to a size such that the image region fits within the layout frame (80A1) in accordance with the position information (70) extracted from the recording medium (58).

9. The image processing device (40, 100) according to any one of claims 2 to 8,
wherein the layout frame (80A1) is a laterally long frame or a vertically long frame in front view with respect to the screen (34).

10. The image processing device (40, 100) according to any one of claims 1 to 9,
wherein the recommended region (68) is a square region.

11. The image processing device (40, 100) according to any one of claims 1 to 10,
wherein the captured image (78) is obtained by performing interval imaging or continuous imaging.

12. The image processing device (40, 100) according to claim 11,
wherein the plurality of captured images (78) are selected from a plurality of candidate images (66) obtained by performing the interval imaging or the continuous imaging in response to a given selection instruction (77).

13. The image processing device (40, 100) according to claim 12,
wherein the plurality of candidate images (66) are displayed on the screen as a plurality of thumbnail images (76), and
each of the plurality of captured images (78) is a candidate image (66) corresponding to a thumbnail image (76) selected from the plurality of thumbnail images (76).

14. An image processing method comprising:
displaying a live view image (36) on a screen (34);
displaying, in the live view image (36), a recommended region indicating a recommended position in the live view image (36);
acquiring a plurality of captured images (78) each having an outer edge larger than an outer edge of the recommended region (68) in a state where the recommended region (68) is displayed in the live view image (36); and
outputting a plurality of adjusted images (78A) based on the plurality of captured images (78) in a selected layout,
wherein the adjusted image (78) is an image obtained by adjusting a size of a corresponding captured image (78) to a size such that an image region at a position corresponding to a position of the recommended region (68) in the captured image (78) fits within a layout frame (80A1) in the layout.

15. A storage medium (50) storing a program (60) executable by a computer (40) to execute a process comprising:
displaying a live view image (36) on a screen (34);
displaying, in the live view image (36), a recommended region (68) indicating a recommended position in the live view image (36);
acquiring a plurality of captured images (78) each having an outer edge larger than an outer edge of the recommended region (68) in a state where the recommended region (68) is displayed in the live view image (36); and
outputting a plurality of adjusted images (78A) based on the plurality of captured images (78) in a selected layout,
wherein the adjusted image (78) is an image obtained by adjusting a size of a corresponding captured image (78) to a size such that an image region at a position corresponding to a position of the recommended region (68) in the captured image (78) fits within a layout frame (80A1) in the layout.
